# EUROPÄISCHE PATENTSCHRIFT

(11) **EP 1 247 443 B1**
(45) Veröffentlichungstag und Bekanntmachung des Hinweises auf die Patenterteilung: **02.08.2006**
(21) Anmeldenummer: 02006311.1
(22) Anmeldetag: 21.03.2002
(51) Int. Cl.: A01F 29/02

(54) **Häckseleinrichtung**
Chopping device
Dispositif de hachage

(30) Priorität: 05.04.2001 DE 10117154
(43) Veröffentlichungstag der Anmeldung: 09.10.2002
(73) Patentinhaber: CLAAS Selbstfahrende Erntemaschinen GmbH, 33428 Harsewinkel (DE)
(72) Erfinder: Niermann, Martin, 33428 Harsewinkel (DE)

(56) Entgegenhaltungen:
- EP-A- 0 538 599
- DE-A- 4 131 895
- DE-B- 1 040 308
- GB-A- 2 157 548
- US-A- 3 717 062

## Beschreibung

Die Erfindung betrifft eine Häckseleinrichtung für eine landwirtschaftliche Erntemaschine, die mit einem Häckselrotor ausgerüstet ist, der mit einer rotierend antreibbaren Messerwelle ausgestattet ist, auf die mehrere im gleichen Winkelabstand zueinander stehende Reihen von im Abstand zueinander stehenden Häckselmesser drehfest aufgesetzt sind, wobei die Häckselmesser mit einer Lagerbohrung versehen sind, in die Lagerbuchsen eingreifen, wobei zumindest ein Häckselmesser von einer in Drehrichtung des Häckselrotors vorauseilenden Messerkante und einer hierzu parallelen nachlaufenden Messerkante gebildet wird.

Die in Frage kommende Häckseleinrichtung ist bevorzugt für einen Mähdrescher zu verwenden, um das ausgedroschene Stroh zu häckseln. Die Häckseleinrichtung kann jedoch auch bei einem Häcksler zum Ernten von Feldfrüchten, Grünfutter und dergleichen eingesetzt werden. Üblicherweise ist die Messerwelle mit vier Reihen von Häckselmessern bestückt, wobei die einzelnen Häckselmesser einer Reihe vorzugsweise paarweise angeordnet sind. Die Häckselmesser sind an den in Drehrichtung vorn liegenden Kanten als Schneidkanten ausgebildet.

Eine Häckseleinrichtung der des Oberbegriff von Anspruch 1 entspricht ist aus DE-B-10 40 308 bekannt.

Die bisher bekannten Häckselmesser der in Frage kommenden Häckseleinrichtungen sind rechteckig oder annähernd rechteckig ausgeführt, d. h. die der Messerwelle abgewandt liegenden Kanten stehen rechtwinklig zu den voraus- und nachlaufenden Kanten. Die Lagerbohrungen und die Lagerbuchsen sind zylindrisch ausgebildet. Derartige Häckseleinrichtungen haben sich auch im robusten Ernteeinsatz bestens bewährt. Es werden jedoch ständig höhere Leistungen der Erntemaschinen erwartet. Daraus ergibt sich, dass nach besseren Lösungen gesucht werden muss. Außerdem hat sich herausgestellt, dass die Flächenpressung zwischen der Lagerbohrung und der Lagerbuchse in den den Schneidkanten abgewandt liegenden Bereichen extrem hoch ist, wodurch im Laufe der Zeit ein Verschleiß auftritt, die dann ein Auswechseln erforderlich machen. Bei den bisher bekannten Häckseleinrichtungen sind die Lagerbohrungen in der Mittellängsachse der Häckselmesser angeordnet, d. h. die Mittelpunkte der Lagerbohrungen liegen in gleichen Abständen zu den vorauslaufenden und zu den nachlaufenden Kanten, bezogen auf die radiale Erstreckung.

Der Erfindung liegt die Aufgabe zugrunde, eine Häckseleinrichtung der eingangs genauer beschriebenen Art in konstruktiv einfacher Weise so zu gestalten, dass zumindest die Leistung erhöht wird, und dass ggfs. auch eine Verschleißminderung eintritt.

Die gestellte Aufgabe wird gelöst, indem die Messerkanten des Häckselmessers zueinander parallel sind, und die Schneidkante des wenigstens einen Häckselmessers in dem an den äußeren Messerumlaufkreis angrenzenden Bereich gegenüber dem der Messerwelle zugewandten Bereiche, bezogen auf die Drehrichtung des Häckselrotors, vorauslaufend angeordnet ist.

In vorteilhafter Weiterbildung der Erfindung sind die Lagerbohrungen des oder der Häckselmesser zur Mittellängsachse des Häckselmessers versetzt abgeordnet.
Die vorauslaufenden Schneidkanten der Häckselmesser stehen nun sinngemäß schräg zu den gedachten Verbindungslinien zwischen der Drehachse des Häckselrotors und den Mittelpunkten der Lagerbohrungen, wobei der Abstand zu diesen gedachten Verbindungen in Richtung zum Messerumlaufkreis kontinuierlich zunimmt. Dadurch wird sinngemäß ein Scherenschnitt erreicht, wenn die Häckselmesser des Häckselrotors an feststehenden Gegenmessern vorbeilaufen. Die Schnitte für den Häckselvorgang verlaufen in besonders günstiger Weise etwa von außen nach innen, wodurch die Schnittkräfte herabgesetzt werden, sodass eine Leistungssteigerung erzielt wird.

Zweckmäßigerweise sind die Häckselmesser in eine solche Schrägstellung gebracht, dass die gedachten Verlängerungen der Schneidkanten die Drehachse der Messerwelle schneiden oder in einem geringen Versatz dazu schneiden. Der von den vorauslaufenden Schneidkanten der Häckselmesser und den gedachten Verbindungen zwischen der Drehachse des Häckselrotors und den Mittelpunkten der Lagerbohrungen ist dann auch ein verhältnismäßig kleiner spitzer Winkel, der beispielsweise im Bereich zwischen 15 und 20 Grad liegt. Durch die Schrägstellung der Häckselmesser würden sich zwei Messerumlaufkreise ergeben, wobei der Durchmesser der nachlaufenden äußeren Kante größer ist als der der vorauslaufenden Kante, sofern die äußeren Stirnflächen der Häckselmesser rechtwinklig zu den vorauslaufenden und nachlaufenden Kanten stehen. Damit es nicht zu Verstopfungen im Einlaufkanal kommt, ist vorgesehen, dass die der Drehachse der Messerwelle abgewandten äußeren Stirnflächen der Häckselmesser unter einem spitzen Winkel zu den vorauslaufenden Schneidkanten der Häckselmesser stehen. Dadurch liegt der Umlaufkreis der hinteren äußeren nachlaufenden Kanten innerhalb des Umlaufkreises der vorauslaufenden Kanten oder die Umlaufkreise fallen zusammen. Diese Anordnung ergibt sich aus dem Schrägungswinkel. Der zwischen den vorauslaufenden Kanten und den äußeren Stirnflächen eingeschlossene Winkel kann beispielsweise 80 Grad betragen. Diese optimale Schrägstellung der Häckselmesser wird erreicht, indem die Lagerbohrungen der Häckselmesser gegenüber deren Mittellängsachsen in Richtung zu den Schneidkanten versetzt sind. Dadurch wird eine asymmetrische Anordnung geschaffen. Auch bei der erfindungsgemäßen Gestaltung des Häckselrotors ist es vorteilhaft, wenn die Breite der Häckselmesser über die gesamte Höhe gleichbleibend oder annähernd gleichbleibend ist.

Die vom Häckselmesser zu übertragende Schnittkraft resultiert aus dem Gewicht des Häckselmessers und der Betriebsdrehzahl. Beim Häckselmesser in der gestreckten Lage ist die Lagerreibung der entscheidende Faktor für die zu übertragende Schnittkraft. Bei einem aus der Strecklage bewegten Messer kommt zur Gleitreibung das Rückstellmoment hinzu. Sobald sich das Messer in Bewegung befindet, tritt zwischen der Lagerbohrung und der Lagerbuchse unvermeidlich ein Verschleiß auf. Um das sogenannte Losbrechmoment jedes Häckselmessers zu erhöhen, ist vorgesehen, dass die Umfangsfläche jeder Lagerbuchse, jedes Häckselmessers zumindest über einen bestimmten Winkelbereich wenigstens eine Schrägfläche aufweist, und dass die Lagerbohrung jedes Häckselmessers eine entsprechend gestaltete Anlagefläche aufweist. Dadurch wird in leistungssteigernder Weise das Losbrechmoment erhöht, so dass entweder die Schnittleistung erhöht wird oder der Verschleiß vermindert wird. Zweckmäßigerweise erstreckt sich jede Schrägfläche über einen Winkel von ca. 180 Grad oder annähernd über einen Winkel von 180 Grad, wobei die Schrägfläche an der dem äußeren Stirnende des Häckselmessers abgewandten Winkelbereich liegt. Durch die Schrägfläche wird außerdem die Flächenpressung deutlich herabgesetzt, da die Schrägfläche größer ist als eine zylindrische Fläche. Eine optimale Wirkung wird erzielt, wenn die Schrägfläche unter einem Winkel von 45 Grad zur Messerebene steht. Da, wie bereits gesagt, die Häckselmesser vorzugsweise paarweise mittels einer entsprechenden Lagereinrichtung mit der Messerwelle verbunden sind, würden sich zwei verschiedene Ausführungen ergeben. Um dies zu vermeiden ist vorgesehen, dass die Lagerbohrung jedes Häckselmessers zumindest über einen bestimmten Winkelbereich keilförmig gestaltet ist, und dass sich die entsprechenden Schrägflächen der Lagerbuchse über die halbe Dicke des Häckselmessers und dass sich die andere Schrägfläche über die halbe Dicke einer das Häckselmesser festsetzenden Klemmscheibe erstreckt. Dadurch ergeben sich auch bei einer paarweisen Anordnung der Häckselmesser stets gleiche Ausführungen. Es werden dann bevorzugt zwei Lagerbuchsen und zwei Klemmscheiben mit einer Schraubenklemme miteinander verbunden. Vorzugsweise ist jedoch vorgesehen, dass die Lagerbohrung umlaufend keilförmig ausgebildet ist, und dass die Schrägflächen der Lagerbuchse und der Klemmscheibe ebenfalls umlaufend sind. Auch bei den keilförmigen Ausbildungen stehen bevorzugt die Schrägflächen unter einem Winkel von 45 Grad zur Messerebene. Es sei noch erwähnt, dass die konische oder die mit Schrägflächen ausgestattete Lagereinrichtung nicht zwingend notwendig mit der speziellen Messeranordnung in Verbindung gebracht werden muss.

Anhand der beiliegenden Zeichnungen wird die Erfindung noch näher erläutert.

### Es zeigen:

- Figur 1: den Häckselrotor einer erfindungsgemäßen Häckseleinrichtung in einer Stirnansicht,
- Figur 2: ein auf einer Messerwelle angeordnetes Häckselmesser in der erfindungsgemäßen Anordnung und der herkömmlichen Anordnung in einer strichpunktierten Darstellung,
- Figur 3: zwei mittels eines Messerhalters paarweise an der Messerwelle angeordnete Häckselmesser in Schnittdarstellung,
- Figur 4 und: ein Häckselmesser als Einzelheit mit Blick auf die Lagerbohrung
- Figur 5: das Häckselmesser nach der Figur 4 in einer Schnittdarstellung.

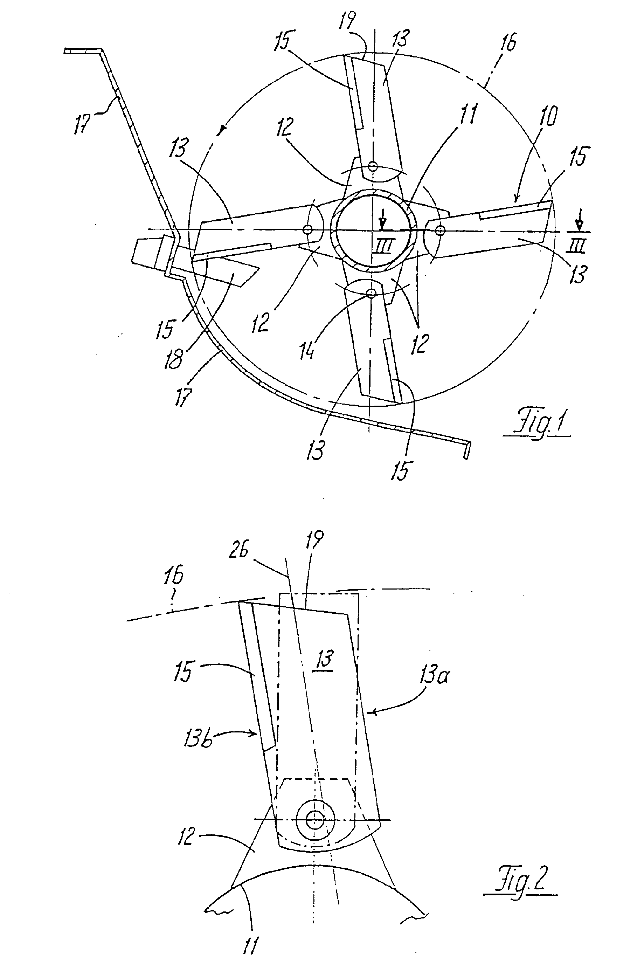

Der in der Fig. 1 dargestellte Häckselrotor 10 ist mit einer Messerwelle 11 ausgestattet, die aus Rohr gefertigt ist und auf der vier Reihen von Messerhaltern 12 festgelegt sind. Die Messerhalter stehen in einem gleichbleibenden Winkelversatz von 90 Grad zueinander. In noch näher erläuterter Weise ist an jedem Messerhalter 12 ein oder zwei von zueinander parallelen Messerkanten (13a,13b) gebildete Häckselmesser 13 mittels einer Lagereinrichtung gelagert. Jedes Häckselmesser hat an der der Messerwelle 11 zugewandten Endbereich eine Lagerbohrung 14, die gegenüber der Mittellängsachse des Häckselmessers 13 in Richtung zu der vorauslaufenden Schneidkante 15 des Häckselmessers versetzt ist. Die Häckselmesser 13 sind so angeordnet, dass der äußere Bereich jeder Schneidkante gegenüber dem inneren, der Messerwelle 13 zugewandten Bereich vorauseilend ist.

Die Fig. 1 zeigt, dass die gedachten Verbindungslinien zwischen der Drehachse der Messerwelle 11 und den Mittelpunkten der Lagerbohrungen 14 zu den Schneidkanten 15 der Häckselmesser 13 einen spitzen Winkel einschließen. Die äußere Messerumlaufbahn ist durch den in strichpunktierten Linien gezeichneten Kreis 16 gekennzeichnet. Sinngemäß sind die Häckselmesser 13 schräg gestellt. Damit die äußere Randkante der nachlaufenden Kante jedes Häckselmessers 13 mit der Messerumlaufbahn 16 der vorauslaufenden Randkante zusammenfällt oder innerhalb der Umlaufbahn liegt, ist vorgesehen, dass die der Messerwelle 11 abgewandt liegende äußere Stirnfläche abgeschrägt ist, d. h. der zwischen dieser Fläche und der Schneidkante 15 eingeschlossene Winkel liegt unter 90 Grad, vorzugsweise bei 80 Grad. Durch die spezielle Gestaltung des Häckselrotors 10 wird eine asymmetrische Anordnung geschaffen. Dadurch werden optimale Voraussetzungen für die Schneidvorgänge geschaffen. In strichpunktierten Linien ist noch angedeutet, dass bei einer mittigen Anordnung der Lagerbohrung 14 der durch die außermittige Lagerung erzielte Effekt nicht erreicht wird. Mit dem Bezugszeichen 17 ist in der Fig. 1 ein Leitblech 17 bezeichnet, welches den Einführkanal für das Häckselgut begrenzt. Zum Zerkleinern des Häckselgutes wirken die rotierenden Häckselmesser 13 mit einer feststehenden Reihe von Häckselmessern 18 zusammen.

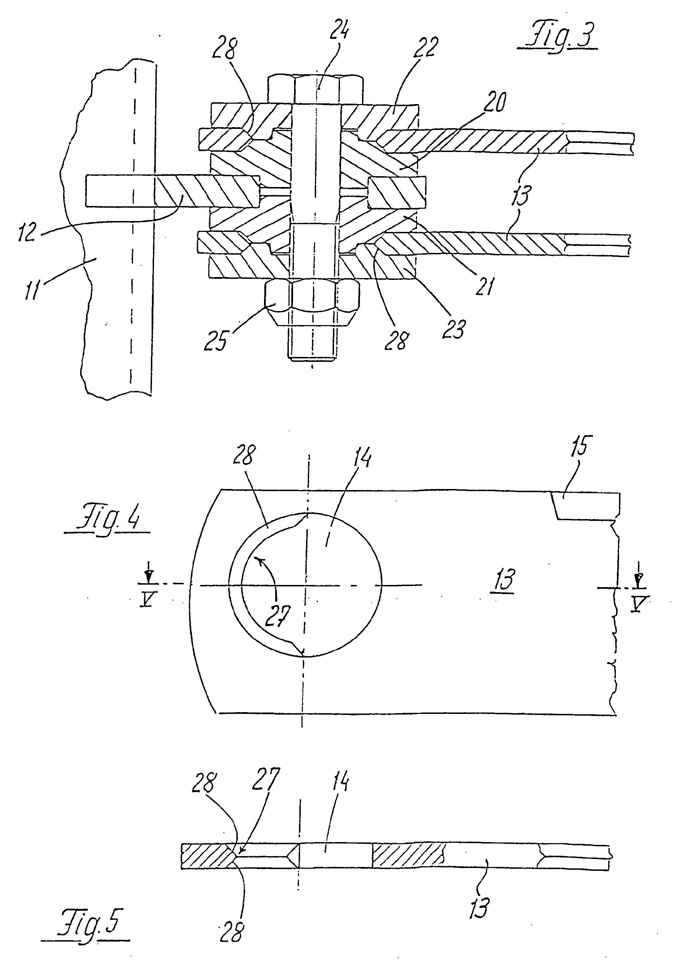

Die Fig. 2 zeigt wesentlich deutlicher, dass die Lagerbohrungen 14 gegenüber den Mittellängsachsen der Häckselmesser 13 in Richtung zu den vorauslaufenden Schneidkanten 15 versetzt sind. Außerdem zeigt die Figur, dass die der Messerwelle 11 abgewandt liegende äußere Stirnfläche jedes Häckselmessers 13 abgeschrägt ist. Die bislang bekannte Anordnung ist in strichpunktierten Linien dargestellt. Die äußere Stirnfläche ist durch das Bezugszeichen 19 gekennzeichnet.

Die Fig. 3 zeigt die paarweise Befestigung von zwei Häckselmessern 13 auf der Messerwelle 11. Die Häckselmesser 13 werden durch zwei Lagerbuchsen 20, 21 und durch zwei Klemmscheiben 22, 23 über den Messerhalter 12 mit der Messerwelle 11 fest verbunden. Diese vier Bauteile werden mittels einer Schraube 24 und einer aufgedrehten Mutter derart zusammengehalten, dass die Häckselmesser 13 fest geklemmt werden. Im dargestellten Ausführungsbeispiel ist jedes Häckselmesser 13 mit einer Lagerbohrung 26 ausgestattet, die zur Bildung eines Keiles zwei Schrägflächen aufweist. Jede Lagerbuchse 20, 21 und jede Klemmscheibe 22, 23 ist mit entsprechenden Schrägflächen ausgestattet, die sich über die halbe Dicke des Häckselmessers 13 erstrecken. Durch die Schrägflächen bzw. durch die keilförmige Gestaltung der Lagerbohrung 14 wird in verschleißmindernder Weise die Flächenpressung im Betriebszustand des Häckselrotors 10 reduziert. Entgegen der Darstellung nach der Fig. 3 könnte die Lagerbohrung auch aus einer sich von einer Seite zur anderen Seite erstreckenden Schrägfläche begrenzt sein. In bevorzugter Ausführung würde dann jede Lagerbuchse 20, 21 eine entsprechende, rundum verlaufende Schrägfläche aufweisen.

Die Fig. 4 und 5 zeigen das Häckselmesser 13 als Einzelheit. Entgegen der Darstellung könnte sich die Keilform des Häckselmessers auch auf den Bereich erstrecken, der der Messerwelle 11 zugewandt liegt, bzw. der der äußeren Stirnfläche 19 abgewandt liegt. Es sei noch erwähnt, dass die mit einer Schrägfläche oder mit mehreren Schrägflächen ausgestattete Lagerbohrung 14 des Häckselmessers 13 unabhängig von der Lagerung und Anordnung der Häckselmesser 13 zur Messerwelle 10 ist. Außerdem ist eine derartige Halterung der Häckselmesser 13 unabhängig von deren Gestaltung.

Die Erfindung ist nicht auf die dargestellten Ausführungsbeispiele beschränkt. Wesentlich ist, dass der der Messerwelle 11 abgewandte Bereich der Schneidkante 15 gegenüber dem der Messerwelle 11 zugewandten Bereich vorauslaufend ist.

### Bezugszeichenliste

- 10: Häckselrotor
- 11: Messerwelle
- 12: Messerhalter
- 13: Häckselmesser
- 14: Lagerbohrung
- 15: Schneidkante
- 16: Kreis
- 17: Leitblech
- 18: Häckselmesser
- 19: äußere Stirnfläche
- 20: Lagerbuchse
- 21: Lagerbuchse
- 22: Klemmscheibe
- 23: Klemmscheibe
- 24: Schraube
- 25: Mutter
- 26: Mittellängsachse

## Patentansprüche

1. Häckseleinrichtung für eine landwirtschaftliche Erntemaschine mit einem Häckselrotor, der mit einer rotierend antreibbaren Messerwelle ausgestattet ist, auf die eine Vielzahl von Reihen im Abstand zueinander stehender Häckselmesser drehfest aufgesetzt sind, wobei die Häckselmesser mit einer Lagerbohrung versehen sind, wobei
zumindest ein Häckselmesser (13) von einer in Drehrichtung des Häckselrotors (10) vorauseilenden Messerkante (13b) und einer hierzu parallelen nachlaufenden Messerkanten (13a) gebildet wird, **dadurch gekennzeichnet, daß** die Schneidkante (15) des wenigstens einen auf der Messerwelle (11) angeordneten Häckselmessers (13) in ihrem an den äußeren Messerumlaufkreis (16) angrenzenden Bereich gegenüber ihrem der Messerwelle (11) zugewandten Bereich in Drehrichtung des Häckselrotors (10), vorauslaufend angeordnet ist.

2. Häckseleinrichtung nach Anspruch 1,
**dadurch gekennzeichnet,**
**dass** die Lagerbohrung (14) des wenigstens einen Häckselmessers (13) gegenüber der sich radial erstreckenden Mittellängsachse (26) des Häckselmessers (13) versetzt ist.

3. Häckseleinrichtung nach Anspruch 1 oder 2, **dadurch gekennzeichnet, dass** die gedachten Verlängerungen der Schneidkanten (15) der Häckselmesser (13) die Drehachse der Messerwelle (11) schneiden oder in einem geringen Versatz dazu schneiden.

4. Häckseleinrichtung nach einem oder mehreren der vorhergehenden Ansprüche 1 bis 3, **dadurch gekennzeichnet, dass** die der Drehachse der Messerwelle (11) abgewandt liegenden äußeren Stirnflächen der Häckselmesser (13) unter einem spitzen Winkel zu den vorauslaufenden Schneidkanten (15) der Häckselmesser (13) stehen.

5. Häckseleinrichtung nach einem oder mehreren der vorhergehenden Ansprüche 1 bis 4, **dadurch gekennzeichnet, dass** die Lagerbohrungen (14) der Häckselmesser (13) in Richtung zu den Schneidkanten (15) der Häckselmesser (13) versetzt sind.

6. Häckseleinrichtung nach einem oder mehreren der vorhergehenden Ansprüche 1 bis 5, **dadurch gekennzeichnet, dass** die Umfangsfläche jeder Lagerbuchse (20, 21) jedes Häckselmessers (13) zumindest über einen bestimmten Winkelbereich wenigstens eine Schrägfläche aufweist, und dass die Lagerbohrung (14) jedes Häckselmessers (13) eine entsprechend gestaltete Anlagefläche aufweist.

7. Häckseleinrichtung nach Anspruch 6, **dadurch gekennzeichnet, dass** die Schrägfläche jeder Lagerbohrung (14) sich über einen Winkel von 180 Grad oder annähernd über einen Winkel von 180 Grad erstreckt, und dass die Schrägfläche an der der Messerwelle (11) zugewandten Winkelbereich vorgesehen ist.

8. Häckseleinrichtung nach Anspruch 6 oder 7, **dadurch gekennzeichnet, dass** die Lagerbohrung (14) jedes Häckselmessers (13) keilförmig gestaltet ist, und dass sich die Schrägflächen der Lagerbohrung (14) über den gesamten Durchmesser erstrecken.

9. Häckseleinrichtung nach Anspruch 8, **dadurch gekennzeichnet, dass** die entsprechend der Keilform der Lagerbohrung (14) gestalteten Schrägflächen sich in der Lagerbuchse (20, 21) und den die Häckselmesser (13) festklemmenden Klemmscheiben (22, 23) vorgesehen sind.

10. Häckseleinrichtung nach einem oder mehreren der vorhergehenden Ansprüche 6 bis 9, **dadurch gekennzeichnet, dass** die Schrägflächen unter einem Winkel von 45 Grad zur Messerebene stehen.

## Claims

1. A chopping device for an agricultural harvester comprising a chopping rotor which is equipped with a blade shaft which is drivable in rotation and on which a plurality of rows of mutually spaced chopping blades are non-rotatably fitted, wherein the chopping blades are provided with a mounting bore, wherein at least one chopping blade (13) is formed by a blade edge (13b) leading in the direction of rotation of the chopping rotor (10) and a trailing blade edge (13a) which is parallel thereto, **characterised in that** the cutting edge (15) of the at least one chopping blade (13) arranged on the blade shaft (11) is arranged to lead in its region adjoining the outer blade orbital circle (16) with respect to its region towards the blade shaft (11) in the direction of rotation of the chopping rotor (10).

2. A chopping device according to claim 1 **characterised in that** the mounting bore (14) of the at least one chopping blade (13) is displaced with respect to the radially extending longitudinal centre line (26) of the chopping blade (13).

3. A chopping device according to claim 1 or claim 2 **characterised in that** the notional prolongations of the cutting edges (15) of the chopping blades (13) intersect the axis of rotation of the blade shaft (11) or intersect it at a slight displacement in relation thereto.

4. A chopping device according to one or more of preceding claims 1 to 3 **characterised in that** the outer end faces of the chopping blades (13), which are remote from the axis of rotation of the blade shaft (11), are at an acute angle relative to the leading cutting edges (15) of the chopping blades (13).

5. A chopping device according to one or more of preceding claims 1 to 4 **characterised in that** the mounting bores (14) of the chopping blades (13) are displaced in a direction towards the cutting edges (15) of the chopping blades (13).

6. A chopping device according to one or more of preceding claims 1 to 5 **characterised in that** the peripheral surface of each mounting bush (20, 21) of each chopping blade (13) has at least one inclined surface at least over a given angular region and that the mounting bore (14) of each chopping blade (13) has a contact surface of corresponding configuration.

7. A chopping device according to claim 6 **characterised in that** the inclined surface of each mounting bore (14) extends over an angle of 180 degrees or approximately over an angle of 180 degrees and that the inclined surface is provided at the angular region towards the blade shaft (11).

8. A chopping device according to claim 6 or claim 7 **characterised in that** the mounting bore (14) of each chopping blade (13) is of a wedge-shaped configuration and that the inclined surfaces of the mounting bore (14) extend over the entire diameter.

9. A chopping device according to claim 8 **characterised in that** the inclined surfaces which are of a configuration corresponding to the wedge shape of the mounting bore (14) are provided in the mounting bush (20, 21) and the clamping discs (22, 23) which clamp the chopping blades (13) fast.

10. A chopping device according to one or more of preceding claims 6 to 9 **characterised in that** the inclined surfaces are at an angle of 45 degrees relative to the plane of the blade.

## Revendications

1. Dispositif de hachage pour une machine agricole de récolte avec un rotor de hachage qui est équipé d'un arbre à couteaux rotatif entraîné sur lequel est disposée de manière solidaire en rotation une pluralité de rangées de couteaux de hachage distants les uns des autres, les couteaux de hachage étant dotés d'un trou de fixation, au moins un couteau de hachage (13) étant formé d'une arête de couteau (13b) qui est située à l'avant par rapport au sens de rotation du rotor de hachage (10) et d'une arête de couteau (13a) parallèle à celle-ci et située à l'arrière, **caractérisé en ce que**, dans sa zone voisine du cercle extérieur décrit par le couteau, l'arête de coupe (15) du couteau de hachage au nombre d'au moins un (13) disposé sur l'arbre à couteaux (11) est située, par rapport au sens de rotation du rotor de hachage (10), en avant de sa zone tournée vers l'arbre à couteaux (11).

2. Dispositif de hachage selon la revendication 1, **caractérisé en ce que** le trou de fixation (14) du couteau de hachage au nombre d'au moins un 13) est décalé par rapport à l'axe longitudinal médian (26) du couteau de hachage (13) s'étendant dans la direction radiale.

3. Dispositif de hachage selon la revendication 1 ou 2, **caractérisé en ce que** les prolongements imaginaires des arêtes de coupe (15) des couteaux de hachage (13) coupent l'axe de rotation de l'arbre à couteaux (11) ou passent à une faible distance de celui-ci.

4. Dispositif de hachage selon l'une quelconque des revendication précédentes 1 à 3, **caractérisé en ce que** les surfaces frontales extérieures des couteaux de hachage (13), opposées à l'axe de rotation de l'arbre à couteaux (11), forment un angle aigu avec les arêtes de coupe avant (15) des couteaux de hachage (13).

5. Dispositif de hachage selon l'une quelconque des revendication précédentes 1 à 4, **caractérisé en ce que** les trous de fixation (14) des couteaux de hachage (13) sont décalés dans la direction des arêtes de coupe (15) des couteaux de hachage (13).

6. Dispositif de hachage selon l'une quelconque des revendication précédentes 1 à 5, **caractérisé en ce que** la surface périphérique de chaque coussinet (20, 21) de chaque couteau de hachage (13) présente, sur au moins une certaine portion angulaire, un chanfrein, et **en ce que** le trou de fixation (14) de chaque couteau de hachage (13) possède une surface d'appui conçue de manière correspondante.

7. Dispositif de hachage selon la revendication 6, **caractérisé en ce que** le chanfrein de chaque trou de fixation (14) s'étend sur un angle de 180 degrés ou approximativement sur un angle de 180 degrés, et **en ce que** le chanfrein est réalisé dans la portion angulaire tournée vers l'arbre à couteaux (11).

8. Dispositif de hachage selon la revendication 6 ou 7, **caractérisé en ce que** le trou de fixation (14) de chaque couteau de hachage (13) a une forme de coin et **en ce que** les chanfreins du trou de fixation (14) s'étendent sur la totalité du diamètre.

9. Dispositif de hachage selon la revendication 8, **caractérisé en ce que** les chanfreins réalisés en fonction de la forme de coin du trou dé fixation (14) sont réalisés dans les coussinets (20, 21) et dans les rondelles de fixation (22, 23) qui immobilisent les couteaux de hachage (13).

10. Dispositif de hachage selon l'une quelconque des revendication précédentes 6 à 9, **caractérisé en ce que** les chanfreins forment un angle de 45 degrés par rapport au plan du couteau.
